# EUROPEAN PATENT SPECIFICATION

(11) **EP 0 506 471 B1**
(45) Date of publication and mention of the grant of the patent: **11.12.1996**
(21) Application number: 92302733.8
(22) Date of filing: 27.03.1992
(51) Int. Cl.: G11B 7/007, G11B 7/00, G11B 7/013, G11B 20/10

(54) **Disk recording and reproduction**
Aufzeichnung und Wiedergabe von Platten
Enregistrement et reproduction de disque

(30) Priority: 28.03.1991 JP 87376/91
(43) Date of publication of application: 30.09.1992
(73) Proprietor: SONY CORPORATION, Tokyo 141 (JP)
(72) Inventor: Fujiie, Kazuhiko, c/o Patents Division, Shinagawa-ku, Tokyo 141 (JP); Maeda, Yasuaki, c/o Patents Division, Shinagawa-ku, Tokyo 141 (JP)
(74) Representative: Cotter, Ivan John

(56) References cited:
- EP-A- 0 390 601
- EP-A- 0 419 239
- EP-A- 0 472 414

## Description

This invention relates to disk recording and reproduction.

An optical disk may have a recording capacity larger by two or three orders than that of a magnetic disk, while enabling recorded data to be accessed at a higher speed than that for a tape recording medium. Optical disks also have the advantage of contactless data recording and reproduction, and so have good durability and have come to be used extensively. A well known form of optical disk is the so-called compact disk (CD).

To provide a portable and, above all, a pocket-sized headphone stereo or similar recording/reproducing apparatus using an optical disk, a CD with a diameter of 12cm and a CD with a diameter of 8cm have been proposed. However, with a disk diameter of 12cm, the recording/reproducing apparatus is too bulky to be readily portable. Therefore, a disk 8cm or less in diameter would be preferred. However, in attempting to construct a portable or pocket-sized recording and/or reproducing apparatus for an optical disk 8cm or less in diameter, the following problems arise.

In the case of a standard CD format optical disk, on which are recorded stereophonic digital pulse code modulation (PCM) audio signals sampled with a sampling frequency of 44.1 kHz and quantized to 16 bits, and where these signals may only be reproduced by the user (CD-DA format) the playback time (recording time) of a disk 8cm in diameter is 20 to 22 minutes at most, meaning that a symphony, for example, cannot be recorded on one disk side. A playback time of 74 minutes or longer, which is approximately equal to that of a 12cm CD, is preferred. Also, with the CD-DA format, recording by the user cannot be performed. In addition, contactless type optical disk devices are susceptible to mechanical vibrations and are subject to detracking and defocusing. Thus, when the apparatus is to be portable, some positive measures need to be taken to prevent adverse effects of the detracking or defocusing on the reproducing operation.

Again, with a CD-MO format (a format employing a recordable magneto-optical disk) as an extension format of the above-mentioned standard CD format (CD-DA format), the recording/reproducing time of an 8cm disk is still only 20 to 22 minutes, as in the CD-DA format. The optical pickup device is similarly susceptible to detracking or defocusing due to mechanical vibrations, so that again positive measures need to be taken to prevent any adverse effects thereof on the recording/reproducing operation.

In the so-called CD-I (CD-Interactive) format or in the so-called CD-ROM/XA format, certain bit-compression modes or "levels" are prescribed as standard modes for recording and reproducing bit-compressed digital audio signals. These levels are listed in Table 1:

**TABLE 1**

| **LEVEL** | **SAMPLING FREQUENCY** | **QUANTIZED NO. OF BITS** | **BAND WIDTH** | **PLAYBACK TIME RATIO STEREO/MONAURAL** |
|---|---|---|---|---|
| A | 37.8KhZ | 8 | 17KhZ | 2 / 4 |
| B | 37.8KhZ | 4 | 17KHZ | 4 / 8 |
| C | 18.9kHZ | 4 | 8.5kHZ | 8 / 16 |

Referring to Table 1, when reproducing a disk recorded with, for example, the level B mode, signals obtained by 4-fold bit compression of standard CD-DA format digital signals are reproduced. Thus, if all of the recorded data are stereophonic audio compressed data, playback time may be increased 4-fold (or alternatively reproduction of 4-channel data becomes possible) so that reproduction for 70 minutes or longer may be made with an optical disk 8cm in diameter or less.

With the CD-I format, the disk is rotationally driven at the same linear velocity as that with the standard CD-DA format, so that continuous audio compressed data are reproduced at a rate of one unit to n playback units on the disk, where n is a figure corresponding to the bit compression factor (or the playback time ratio listed in Table 1) and is equal to four in the level B stereo mode. This unit is termed a block or sector, which is made up of 98 frames and has a period of 1/75 second. Therefore, with this level B stereo mode, a data string in which one of four sectors is an audio sector, such as:
S D D D S D D D ...
where S is an audio sector and D is another audio sector or sectors, is recorded on a sector-by-sector basis on the disk. However, for actual recording, since the above data string undergoes a predetermined encoding similar to that for ordinary CD format audio data, such as error correction coding and interleaving, data of the audio sector S and data of the data sector D are arranged in a scrambled fashion in the recording sectors on the disk. The other data sectors D may be, for example, video or computer data. When bit-compressed audio signals are also used for the data sectors D, a data string in which 4-channel audio sectors S1 to S4 are cyclically arranged; that is a data string:
S1 S2 S3 S4 S1 S2 S3 S4 ...
is encoded and recorded on the disk. When recording and reproducing continuous audio signals, the above-mentioned 4-channel audio signals are linked sequentially beginning at the first channel and terminating at the fourth channel. More specifically, channel 1 data corresponding to the audio sector S1 are reproduced from the innermost to the outermost areas of the disk. Channel 2 data corresponding to the audio sector S2 are reproduced from the innermost to the outermost areas of the disk. Channel 3 data corresponding to the audio sector S3 are reproduced from the innermost to the outermost areas of the disk. Finally, channel 4 data corresponding to the audio sector S4 are reproduced from the innermost to the outermost areas of the disk to enable data reproduction for a continuous 4-fold time duration.

However, for the above mentioned continuous reproduction, several track jump operations spanning the inner and outer disk peripheries are necessitated. Since a track jump cannot be achieved instantaneously, playback data are interrupted for a short time period. This means that the playback sound is momentarily interrupted. On the other hand, when continuous audio signals are to be recorded, it is not possible to record, for example, only the sector 2 signals, because the data need to be interleaved at the time of recording. That is, sector 2 data need to be interleaved with adjoining and even near-by sectors, such as sectors S1 and S3, such that it becomes necessary to rewrite signals of perviously recorded sectors. Thus it is extremely difficult to effect real-time recording of these continuous compressed audio signals.

Moreover, it is desirable to permit switching between the abovementioned compression modes, because then the usage of the recording/reproducing apparatus can be significantly increased. However, if it necessary to change the rotational velocity of the disk, the recording pattern, or the signal processing operation, for each of the selected compression modes, the circuitry becomes complex, and consequently expensive. It is therefore desirable that changes brought about in the control operations, recording patterns or signal processing operations as a result of switching between the different compression modes be as small as possible.

A technique for overcoming the above-mentioned problems is proposed in our copending US Patent Application No. 746787 (1991) corresponding to EP-A-472343, published on 26.02.92 and thus comprised in the state of the art within the meaning of Article 54(3) EPC.

Specifically, the proposed technique resides in arranging digital data into a plurality of clusters at an interval of a predetermined number of, (for example, 32) of sectors, providing a number (for example, 5) of cluster-linking sectors at the linking portions of each of the clusters, the cluster-linking sectors being longer than an interleaving length for digital data so that data interleaving in one cluster does not affect the adjoining clusters.

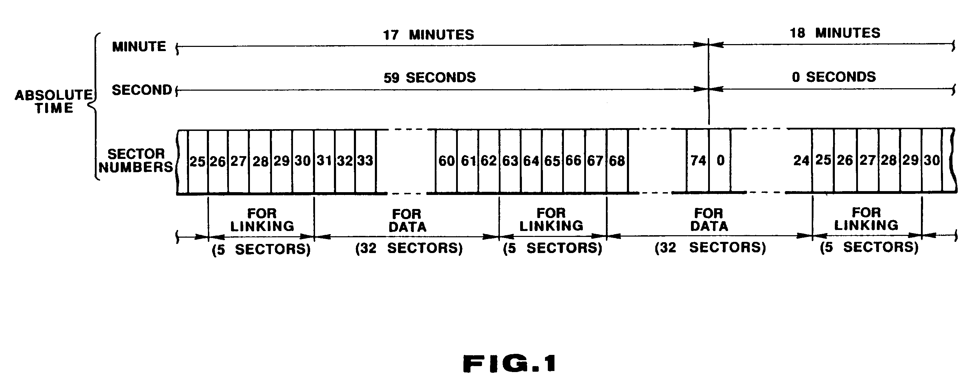

The absolute time, expressed in minutes, seconds and sector numbers (as shown in the accompanying Figure 1) is recorded on the disk as address data in a subcode Q in the CD-DA format, in header data in the CD-ROM format or by modulating the guide groove in the CD-MO format. The absolute time data is also employed for indicating the actual play time.

However, if the digital audio signals are recorded with bit compression, and the compression factor is other than a simple integer such as two or four, the calculation of the actual play time can be a time-consuming operation. Besides, since the linking sectors do not contribute to the actual play time, it is necessary to subtract the linking sectors in calculating the actual play time, so that yet more time is consumed in calculating the actual play time. Besides, in recording data, it is necessary to begin with the linking sector and to calculate which absolute time that linking sector corresponds to, a disk with preformatted addresses and an apparatus for recording and reproducing data for use with such a disk is shown in EP-A-419239.

This invention provides a disk-shaped recording medium in which data to be recorded thereon are divided into sectors of a predetermined length and are arrayed into clusters each comprising a predetermined number of the sectors, and in which cluster-linking sectors are added at connecting portions of neighbouring clusters, wherein cluster addresses for specifying the clusters and sector addresses for specifying the sectors in each cluster are prerecorded on the recording medium.

Preferably the cluster linking sectors are longer than the interleaving length of the data.

Viewed from a second aspect this invention provides an optical disk recording apparatus in which data to be recorded on an optical disk are divided into sectors of a predetermined length and are arrayed into clusters each comprising a predetermined number of the sectors and in which cluster addresses for specifying the clusters and sector addresses for specifying the sectors in each cluster are prerecorded on said disk, the apparatus comprising:
memory means for transiently storing input digital data representing a bit compressed continuous signal;
signal processing means for reading said input digital data from said memory means as a plurality of said sectors, arraying said input digital data into said clusters each comprising a predetermined number of said sectors, appending to connecting portions of said clusters cluster-linking sectors and interleaving said digital data in said clusters, wherein said cluster-linking sectors are longer than the interleaving length for said digital data;
address reproducing means for reproducing said pre-recorded cluster addresses and said pre-recorded sector addresses from said disk;
controlling means for controlling the position of recording on said disk based on said cluster addresses and said sector addresses reproduced by said address reproducing means; and
recording means for recording the digital data from said signal processing means on address positions on said disk specified by said controlling means.

Viewed from a third aspect this invention provides an optical disk reproducing apparatus for use with a disk on which compressed digital data recorded on said disk are divided into sectors of a predetermined length and are arrayed into clusters each comprising a predetermined number of the sectors, on which cluster-linking sectors longer than the interleaving length of the data are added at connecting portions of neighbouring clusters and on which cluster addresses for specifying said clusters and sector addresses for specifying said sectors are prerecorded, said apparatus comprising
address reproducing means for reproducing said cluster addresses and said sector addresses from said disk;
memory means for sequentially storing compressed digital data reproduced from said disk;
expanding means for expanding compressed digital data read from said memory means and outputting the expanded data;
memory controlling means for monitoring the data volume stored in said memory means for controlling writing to and readout from said memory means so that data writing in said memory means is terminated before an overflow of said memory means occurs and data writing is re-started when the data volume stored in said memory means is less than a predetermined volume; and
controlling means for controlling the playback position on said disk at the time of re-starting data writing in said memory means, on the basis of the cluster addresses and the sector addresses reproduced by said address reproducing means so that data contiguous to data stored in said memory means are reproduced.

At least preferred embodiments of this invention also provide a disk recording apparatus comprising a disk-shaped recording medium on which cluster addresses for specifying the clusters and sector addresses for specifying the sectors in the clusters are prerecorded, address reproducing means for reproducing the cluster addresses and the sector addresses from the disk-shaped recording medium, storage means for transiently storing digital data; recording means for arraying the digital data from the memory means into clusters at an interval of a predetermined number of sectors, interleaving the digital data and recording the interleaved data on the disk-shaped recording medium, and controlling means for controlling accessing of the recording means based on the cluster addresses and the sector addresses from the address reproducing means.

In at least a preferred embodiment this invention also provides a disk reproducing apparatus comprising address reproducing means for reproducing cluster addresses for specifying clusters and sector addresses for specifying sectors in the clusters, prerecorded on a disk-shaped recording medium in which digital data are interleaved and recorded in said clusters at an interval of a predetermined number of the sectors and in which cluster-linking sectors each having a length longer than an interleaving length are provided at linking portions between the neighbouring clusters, data reproducing means for reproducing playback data from said disk-shaped recording medium, storage means for transiently storing the playback data from said data reproducing means, memory controlling means for performing a controlling operation for writing said playback data in said memory means when the volume of the playback data stored in the memory means is less than a predetermined volume for maintaining a readout space in excess of a predetermined data volume in said memory means, and controlling means for controlling accessing of said data reproducing means based on the cluster addresses and the sector addresses from said address reproducing means.

In at least a preferred embodiment the present invention provides a disk-shaped recording medium, a disk recording apparatus and a disk reproducing apparatus wherein, when recording audio data on a disk, complication of processing by interleaving may be avoided and changes in the control operations or signal processing operations may be minimized or at least reduced even when selection is made from a plurality of compression modes, and wherein the recording start position can be determined easily and the play time can also be calculated easily.

When recording data on the disk-shaped recording medium, data are stored on a cluster-by-cluster basis, based on the prerecorded or preformatted cluster and sector addresses. Since the cluster-linking sectors (which are longer than the interleaving length) are provided between adjoining clusters, the effect of interleaving on the adjoining clusters may be eliminated by recording the digital data together with the cluster-linking sectors. Besides, the positions at which to start recording on the disk may be determined based on these cluster and sector addresses.

In other words, with the clusters and the cluster-linking sectors as the recording units, recording may be made independently from one cluster to another without the necessity of taking account of the effect of interleaving on other clusters. This can facilitate the processing and the re-recording of data which has not been recorded effectively.

For reproduction, by providing storage means for transient storage of the playback data and effecting reproduction based on the preformatted cluster and sector addresses, dropouts in the playback data caused by the cluster-linking sectors may be buffered and continuous playback data may be produced from the memory means while the play time may be calculated easily from the cluster and sector addresses.

A preferred embodiment of the invention will now be described by way of example only with reference to the accompanying drawings, throughout which like parts are referred to by like references and in which:
Figure 1 is a chart showing the relationship between the clusters and the absolute time;
Figure 2 is a block diagram showing an exemplary arrangement of a disk recording and/or reproducing apparatus according to an embodiment of the present invention;
Figure 3 shows the format of a cluster as a recording unit;
Figure 4 shows the relationship between the cluster address and the sector address;

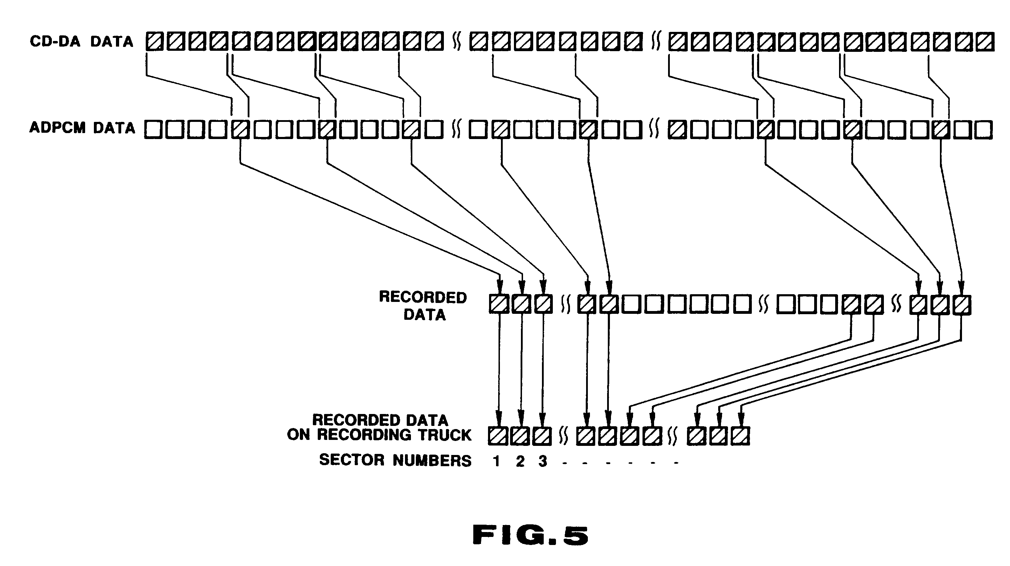

Figure 5 shows a data format employed in the disk recording and/or reproducing apparatus shown in Figure 2;
Figure 6 shows the state of a memory-controlled memory in the recording system of the disk recording and/or reproducing apparatus shown in Figure 2; and
Figure 7 shows the state of a memory-controlled memory in the reproducing system of the disk recording and/or reproducing apparatus shown in Figure 2.

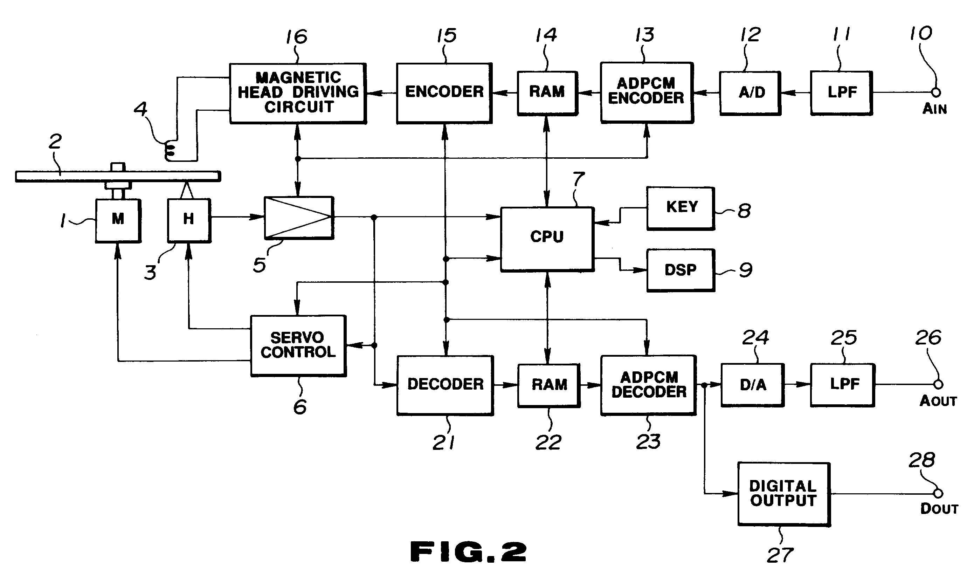

Referring to the drawings, a preferred embodiment of a disk recording/reproducing apparatus according to the present invention will be described. Figure 2 is a block circuit diagram showing a circuit arrangement of the optical disk recording/reproducing apparatus.

In the optical disk recording/reproducing apparatus, shown in Figure 2, a magneto-optical disk 2 rotationally driven by a spindle motor 1 is employed as a recording medium. In order to record data along a recording track of the disk 2, laser light is radiated by an optical head 3 on the disk 2, and a magnetic field modulated in accordance with data to be recorded is applied by a magnetic head 4 to the disk 2. During data reproduction, the recording tracks of the disk 2 are traced with laser light by the optical head 3 for photomagnetically reproducing the recorded data. Data recording/playback is performed on the basis of cluster addresses and sector addresses which are pre-recorded (preformatted) on the magneto-optical disk 2 as will be described below.

The optical head 3 comprises a laser light source; optical components such as a collimator lens, an objective lens, a polarization beam splitter or a cylindrical lens, and a split photodetector, although these devices are not shown, and is arranged to face the magnetic head 4 with the disk 2 in-between. For recording data on the disk 2, the optical head 3 radiates laser light on a target track on the disk 2 and records the data by thermomagnetic recording. The magnetic field is modulated in accordance with the recording data and is applied to the target track by the magnetic head 4, which is driven by a magnetic head driving circuit 16 of the recording system which will be described below. The optical head 3 also detects laser light reflected by the target track for detecting any focusing error by a so-called astigmatic method, and for detecting any tracking error by a so-called push-pull method.

When reproducing data from the magneto-optical disk 2, the optical head 3 detects the polarization angle (Kerr rotation angle) of the reflected laser light from the target track to produce playback signals. The optical head 3 also reproduces the cluster addresses and the sector address which have been preformatted on the disk by modulating the guide groove at the leading end of each sector.

The output of the optical head 3 is supplied to an RF circuit 5. The RF circuit 5 extracts the focusing error signal and the tracking error signal from the output of the optical head 3 and transmits the extracted signals to a servo control circuit 6. The RF circuit 5 also converts the reproduced signals into corresponding binary signals and supplies these binary signals to a decoder 21 in the reproducing system, which will be described below. The RF circuit 5 also transmits the cluster addresses and the sector addresses to a system controller (CPU) 7.

The servo control circuit 6 comprises a focusing servo controlling circuit, a tracking servo controlling circuit, a spindle motor servo controlling circuit and a thread servo controlling circuit, although these circuits are not individually shown. The focusing servo controlling circuit controls the focusing of the optical system of the optical head 3 in order to reduce the focusing error signal towards zero. Similarly, the tracking servo controlling circuit controls the tracking of the optical system of the optical head 3 in order to reduce the tracking error signal towards zero. The spindle motor servo controlling circuit controls the spindle motor 1 for rotationally driving the magneto-optical disk 2 at a predetermined rotational velocity, such as at a constant linear velocity. The thread servo controlling circuit causes the optical head 3 and the magnetic head 4 to be moved to a target track position on the disk 2 designated by the system controller 7. The servo control circuit 6, which performs these various control operations, transmits information indicating the operating states of components controlled by the servo controlling circuit 6 to the system controller 7.

To the system controller 7 are connected a key input unit 8 and a display 9. The system controller 7 controls the recording system and the reproducing system with the operating mode designated by operating input information from the key input unit 8. The system controller 7 also supervises the recording position or the reproducing position on the recording track traced by the optical head 3 and the magnetic head 4 on the basis of the cluster addresses and the sector addresses reproduced from the magneto-optical disk 2. The system controller 7 causes the bit compression mode currently in use to be displayed on the display section 9, in response to bit compression mode data in the reproduced data obtained from the RF circuit 5 by means of a reproducing system described below, or in response to bit compression mode data in an adaptive differential pulse code modulation (ADPCM) encoder 13 which can be selected by the key input unit 8. The system controller 7 also causes the playback time to be displayed on the display 9 on the basis of the bit compression ratio and the above mentioned cluster addresses in the bit compression mode.

For displaying the playback time, the cluster address reproduced from the recording track of the magneto-optical disk 2 is multiplied by the reciprocal of the data compression ratio in the current bit compression mode (e.g. 4 in the case of level B (1/4) compression) to derive actual time information which is displayed on the display section 9. It is also possible to display the current position by the actual recording time during recording by multiplying the read-out preformatted cluster address by the reciprocal of the data compression ratio.

The apparatus also comprises an A/D converter 12 to which an analogue audio signal A_{IN} is supplied from an input terminal 10 by way of a low-pass filter 11.

The A/D converter 12 quantizes the audio signals A_{IN}. The digital audio data generated by the A/D converter 12 is then transmitted to the ADPCM encoder 13. The ADPCM encoder 13 processes the digital audio data at the predetermined transfer rate quantized from the audio signals A_{IN} by the A/D converter 12 by a data compression operation conforming to one of the various modes in the CD-I system shown in Table 1, the particular mode being designated by system controller 7. For example, in the B-level mode of Table 1, the digital audio data are processed into compressed data (ADPCM audio data) having a sampling frequency of 37.8 kHz, with the number of bits per sample being equal to 4, before being supplied to a memory (RAM) 14. The data transfer rate with the B-level stereo mode is reduced to 1/4 of the standard CD-DA format data transfer rate of 75 sectors/second, that is, 18.75 sectors/second.

In the embodiment of Figure 2, it is assumed that the sampling frequency of the A/D converter 12 is fixed at the sampling frequency of the standard CD-DA format, or 44.1 kHz, and that, in the ADPCM encoder 13, bit compression from 16 bits to 4 bits is performed after conversion of the sampling rate in conformity to the compression mode, for example, from 44.1Khz to 37.8Khz for level B. An alternative arrangement is possible in which the sampling frequency of the A/D converter 12 itself may be controlled as a function of the current bit compression mode. In this case, the cut-off frequency of the low-pass filter 11 is also correspondingly controlled as a function of the sampling frequency of the A/D converter 12. That is, the sampling frequency of the A/D converter 12 and the cut-off frequency of the low-pass filter 11 may be simultaneously controlled in dependence upon the compression mode.

The memory 14 is used as a buffer memory in which data writing and read-out are controlled by the system controller 7, and which transiently stores ADPCM audio data supplied from the ADPCM encoder 13 for recording on the disk 2 as the occasion may demand. That is, in the B-level stereo mode, the compressed audio data supplied from the ADPCM encoder 13 are continuously written to the memory 14 at a transfer rate of 1/4 of the standard CD-DA format data transfer rate of 75 sectors/second, that is, 18.75 sectors/second. Although it would be possible to record the compressed data (ADPCM data) on every fourth sector of the disk, it is practically difficult to make such a recording, as mentioned above. For this reason, sector-continuous recording as described below is performed. Such recording on the disk is performed in a burst-like manner at the same data transfer rate as that for the standard CD-DA format, or 75 sectors/second, with the interposition of a non-recording period, using recording units each comprising a cluster composed of a predetermined number of sectors, for example, 32 data sectors and several linking sectors. That is, in the memory 14, the B-level stereo mode ADPCM audio data, which has been continuously written at the lower transfer rate of 18.75 (=75/4) sectors/second conforming to the above-mentioned data compression ratio, is read out as recording data in a burst-like manner at a transfer rate of 75 sectors/second on a cluster-by-cluster basis. The overall data transfer rate of the data read out and recorded in this way, inclusive of the non-recording period, is a lower transfer rate of 18.75 sectors/second. However, the instantaneous data transfer rate within the time of the burst-like recording operation is equal to the above-mentioned standard rate of 75 sectors/second. Therefore, if the rotational velocity of the disk is the same as that of the standard CD-DA format, (a constant linear velocity) recording is made at the same recording density and with the same recording pattern as those used in the CD-DA format.

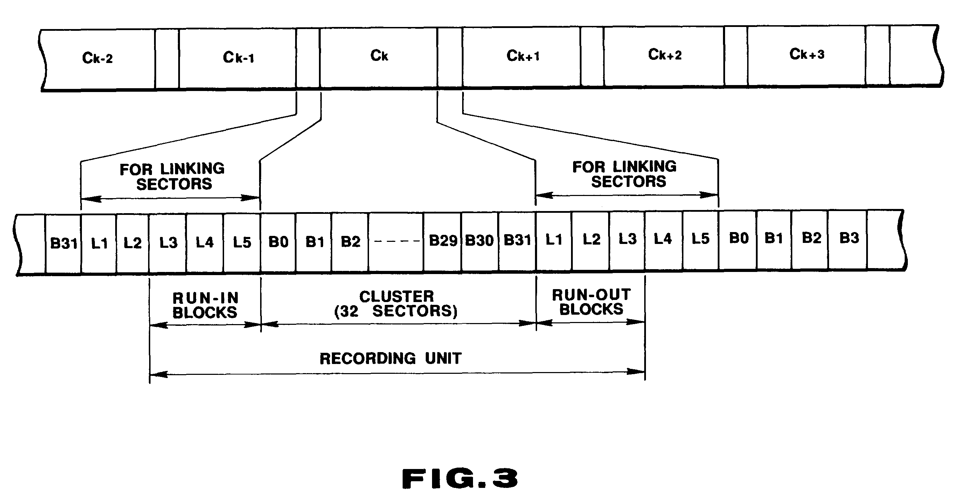

The ADPCM audio data read out from memory 14 in a burst-like manner at the transfer rate of 75 sectors/second, that is, the data to be recorded, is supplied to an encoder 15. In a data string supplied from the memory 14 to the encoder 15, a data unit continuously recorded in each recording is a data cluster composed of a number of, for example 32 sectors, and a few cluster-linking sectors arrayed before and after the cluster. The cluster-linking sectors have a length longer than the interleaving length at the encoder 15, so that, even when the data are interleaved, data of neighbouring clusters remain unaffected. As for details of the recording on the cluster-by-cluster basis, an explanation will be given later by referring to Figure 3.

The encoder 15 processes the recording data supplied in a burst-like manner from the memory 14 with an error correcting coding operation, such as by parity addition or interleaving, or by 8-to-14 modulation (EFM). The data to be recorded, thus encoded by the encoder 15, is supplied to the magnetic head driving circuit 16.

To the head driving circuit 16 is connected to the magnetic head 4, which is thereby driven to apply a magnetic field modulated in accordance with the data to be recorded on the disk 2.

The system controller 7 controls writing to and readout from the memory 14 and, based on this memory control, controls the recording position on the disk so that the above-mentioned data (read out in a burst fashion from memory 14) will be recorded continuously on a recording track of the disk 2. To achieve this recording position control, the system controller 7 supplies control signals designating the recording position on the recording track of the disk 2 to the above-mentioned servo controlling circuit 6.

The reproducing system in the disk recording/reproducing apparatus will now be explained.

The reproducing system reproduces the recording data continuously recorded by the above-described recording system on the recording track of the magneto-optical disk 2, and is provided with a decoder 21 which is supplied with a playback output. This playback output, which is generated by the optical head 3 tracing the recording track on the disk 3 with laser light, is converted into binary format signals by the RF circuit 5 before being supplied to the decoder 21.

The decoder 21 is a counterpart of the above-described encoder 15 of the recording system, and is adapted for decoding the playback output, converted into the binary format signals by the RF circuit 5, by means of error correction, or EFM, decoding, and for reproducing the above-mentioned B level stereo mode ADPCM audio data at a transfer rate of 75 sectors/second, which is faster than the normal transfer rate in the above-mentioned B level stereo mode. The reproduced data, generated by the decoder 21, are supplied to a memory (RAM) 22.

The memory 22 has its data writing and read-out controlled by system controller 7 so that the playback data supplied from decoder 21 at a transfer rate of 75 sectors/second are written into the memory 22 at a transfer rate of 75 sectors/second. Data are continuously read out from the memory 22 at the ordinary B-level stereo mode transfer rate of 18.75 sectors/second.

The system controller 7 performs, besides the above-mentioned writing and read-out control for the memory 22, playback position control in such a manner that the playback data written into the memory 22 in a burst-like manner are reproduced from the recording track of the disk 2 continuously. The playback position control involves supervising the playback position on the disk 2 based on the cluster addresses and the sector addresses, and supplying a control signal designating the playback position on the recording track of the disk 2 to the servo controlling circuit 6.

The B-level stereo mode ADPDM audio data, produced as playback data read out continuously from memory 22 at a transfer rate of 18.75 sectors/second, are supplied to an ADPCM decoder 23.

The ADPCM decoder 23 is a counterpart of the above-mentioned ADPCM encoder 13 of the recording system. The ADPCM decoder 23 has its operating mode designated by system controller 7. With the present apparatus, the B-level stereo mode ADPCM audio data are expanded by a factor of 4 for reproducing the CD-DA mode digital audio data. The reproduced digital data are transmitted by the ADPCM decoder 23 to a digital to analogue (D/A) converter 24.

The D/A converter 24 converts the digital audio data supplied from the ADPCM decoder 23 into an analogue audio signal A_{OUT} which is supplied via a low-pass filter 25 to an output terminal 26.

The reproducing system of the apparatus is also provided with a digital output function so that the digital audio data at the output of the ADPCM decoder 23 is output at a digital output terminal 28 via a digital output encoder 27 as a digital audio signal D_{OUT}.

The magneto-optical disk 2 employed in the above-described disk recording/reproducing apparatus preferably has a recording space of longer than 60 minutes and up to 74 minutes for stereo audio signals. With a data compression ratio of 1/4 as in the B level mode, a recording capacity of about 130M bytes is necessary. For a portable or pocket-sized apparatus, it is preferred to use a disk having an outside diameter of 8cm or less. In addition, a track pitch of 1.6µm and a linear velocity of 1.2 to 1.4m/second, similar to those of a compact disk, are preferred. For satisfying these conditions, the disk outside diameter may be 64mm, the outside diameter of the disk recording region may be 61mm, the inside diameter of the data recording region may be 31mm, the inside diameter of the lead-in region may by 28mm, and the centre hole diameter may be 11mm. By having this disk accommodated in a disk caddy (cartridge) of 68 x 72mm in size and presented to the market in this state, it becomes possible to record and reproduce the disk by a pocket-sized recording/reproducing apparatus. The inside and outside diameters of the disk recording region for enabling recording and/or reproduction for 72 to 76 minutes with the above-mentioned 1/4 data compression mode may be suitably selected within the range of the outside diameter of 60 to 62mm for the inside diameter of 31mm and within the range of the outside diameter of 71 to 73mm for the inside diameter of 50mm.

The recording/reproducing operation of the above-described recording/reproducing apparatus will now be explained in more detail.

The recording data, that is data read out from memory 14, are arranged into clusters each comprising a predetermined number (such as 32) of sectors or blocks, and several cluster-linking sectors are arrayed between adjoining clusters. In more detail, each cluster C comprises 32 sectors or blocks B0 to B31, and five linking sectors L1 to L5 are arranged between these clusters C for linking adjoining clusters, as shown in Figure 3. To record a cluster, such as a K′th cluster Cₖ, the 32 sectors B0 to B31 of the cluster Cₖ, and the linking sectors arrayed before and after the cluster Cₖ, namely the three sectors L3 to L5 towards the cluster Cₖ₋₁ (run-in blocks) and the three sectors L1 to L3 towards the cluster Cₖ₊₁ (run-out blocks), making a total of 38 sectors, are recorded as one unit. The 38-sector record data are transmitted from memory 14 to the encoder 15 where the data are interleaved and rearranged over a distance of up to 108 frames (which corresponds to about 1.1 sectors). However, even after interleaving, the data within the cluster Cₖ are safely contained within a range of from the run-in blocks L3 to L5 to the run-out blocks L1 to L3 without affecting the adjacent clusters Cₖ₋₁ or Cₖ₊₁. Dummy data, such as zero-valued data, are arrayed in the linking sectors L1 to L5 to avoid adverse effects which interleaving might have on the data per se. When recording the next cluster Cₖ₊₁, the three sectors L3 to L5 of the five linking sectors L1 to L5 between the cluster C_{K} and the cluster Cₖ₊₁ are used as run-in blocks. Although the sector L3 is recorded in this manner superfluously, it causes no inconvenience. The cluster may also be composed of 37 sectors inclusive of five linking sectors.

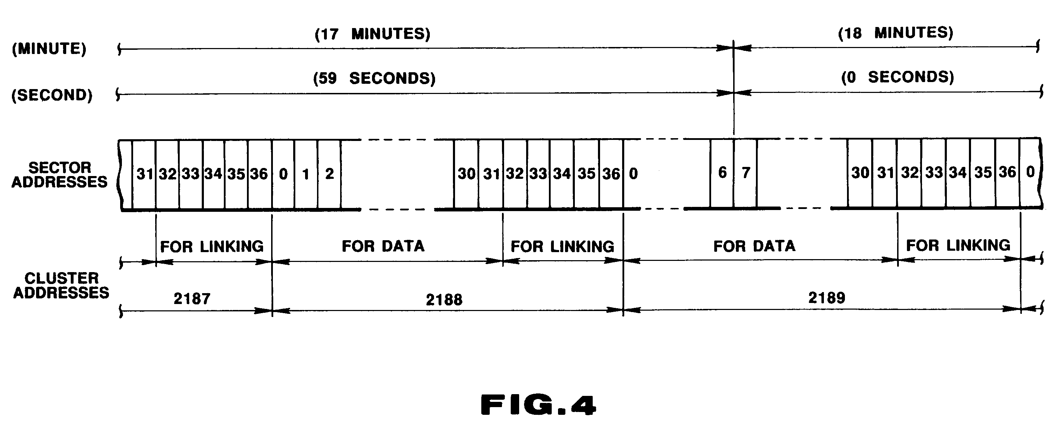

The above-mentioned cluster-by-cluster recording is carried out on the basis of cluster addresses and sector addresses preformatted at the leading end of each sector (for discriminating the clusters from one another and the sectors in each cluster from one another, respectively) by modulating the guide groove for deviating the groove along the track width. It is noted that these addresses are obtained during recording by demodulating the guide groove by reproducing the deviation of the groove. Referring to Figure 4, each cluster is made up of 32 data-recording sectors and five linking sectors, totalling 37 sectors. Cells 0000 to 21XX are allocated as cluster addresses for discriminating each cluster and cells 1 to 37 are allocated as sector addresses for identifying each sector within a cluster. These cluster addresses and sector addresses are preformatted on the disk as pits and are reproduced during recording so that recording positions on the recording track can be controlled on the basis of these reproduced cluster and sector addresses.

By recording on a cluster-by-cluster basis as described above, there is no necessity to take account of interference with adjoining clusters, so that the required data processing may be simplified significantly. Another benefit is that, if the record data cannot be recorded normally due to malfunctions, such as defocusing, detracking etc, or cannot be reproduced satisfactorily, re-recording may be performed on a cluster-by-cluster basis.

The digital data produced by the A/D converter 12 in the recording system of the disk recording and/or reproducing apparatus shown in Figure 2 are data similar to those of the above-mentioned CD-DA format, that is audio PCM data having a sampling frequency of 44.1 kHz, quantised to 16 bits per sample and having a data transfer rate of 75 sectors/second. These data are transmitted to the ADPCM encoder 13 and, if the data are bit-compressed in accordance with the abovementioned B-level stereo mode, the sampling rate if changed to a sampling frequency of 37.8kHz and the number of bits per sample is compressed to 4. Thus the output data are ADPCM audio data having a data transfer rate of 18.75 sectors/second (one quarter of the rate before ADPCM encoding). The B-level stereo mode ADPCM audio data, continuously output at a transfer rate of 18.75 sectors/second from the ADPCM encoder 13, are supplied to the memory 14.

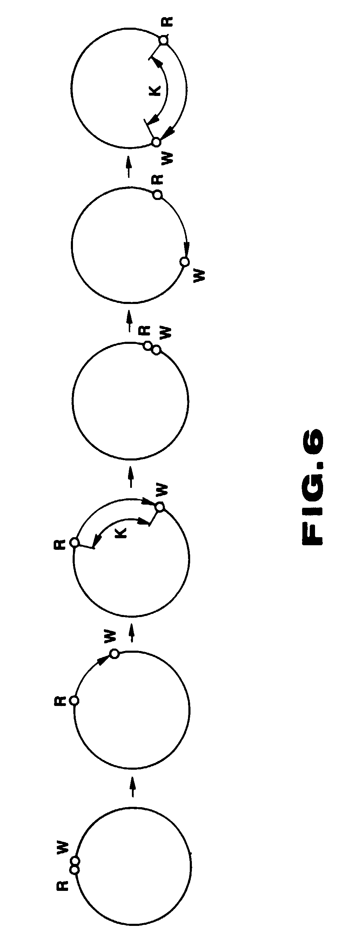

Referring to Figure 6, the system controller 7 controls the memory 14 in such a manner that a write pointer W of the memory 14 is continuously incremented at a transfer rate of 18.75 sectors/second to continuously write the ADPCM audio data in the memory 14 at a transfer rate of 18.75 sectors/second. When the data volume of the ADPCM audio data stored in the memory 14 exceeds a predetermined volume K, a read pointer R of the memory 14 is incremented at a transfer rate of 75 sectors/second to read out the predetermined amount K of the ADPCM data from the memory 14, as data to be recorded, at the above mentioned transfer rate of 75 sectors/second.

That is, in the recording system of the disk recording/reproducing apparatus shown in Figure 2, the ADPCM audio data continuously output at the transfer rate of e.g 18.75 sectors per second from the ADPCM encoder 13 are written in the memory 14 at the above mentioned transfer rate of 18.75 sectors/second under the control of the system controller 7. When the data volume of the ADPCM data stored in the memory 14 exceeds the predetermined data volume K, the ADPCM audio data is read out from memory 14 by the data volume K at a transfer rate of 75 sectors/second as recording data. This means that input data can be continuously written in the memory 14 while a data write region in excess of a predetermined volume is maintained within the memory 14. By recording the data at a recording position on the recording track of the magneto-optical disk 2 based on the cluster and sector addresses under the control by the system controller 7, the recording data read out in a burst fashion from the memory 14 can be recorded consecutively on the recording track. Since a data write region in excess of a predetermined volume is maintained in the memory 14, data can be continuously written in the data write region even if the system controller 7 detects that a track jump etc has occurred due to disturbances or the like to interrupt a recording operation on the magneto-optical disk 2. A reset operation may be carried out in the interim, so that input data can be recorded continuously on the recording track of the magneto-optical disk 2. It is also possible to display the current position on the disk in terms of actual recording time by multiplying the cluster address by 32/75 and the reciprocal of the data compression factor.

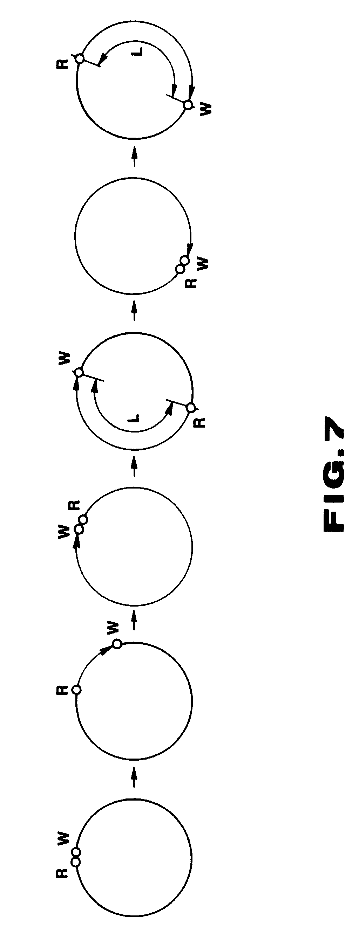

In the reproducing system of the disk recording/reproducing apparatus shown in Figure 2, the system controller 7 controls the memory 22 in such a manner that, as shown in Figure 7, the write pointer W of the memory 22 is incremented at a transfer rate of 75 sectors/second to write the reproduced data in the memory 22 at the transfer rate of 75 sectors/second, the read pointer R of the memory 22 is continuously incremented at a transfer rate of 18.75 sectors/second to continuously read out the playback data from memory 22 at the transfer rate of 18.75 sectors/second, writing is discontinued when the write pointer W catches up with the read pointer R and, when the data volume of playback data stored in the memory 22 is lower than a predetermined volume L, writing is started again.

Thus, with the above described reproducing system of the disk recording/reproducing apparatus, the system controller 7 controls the memory 22 in such a manner that the B-level stereo mode ADPCM audio data reproduced from the recording track of the magneto-optical disk 2 in a burst-like manner is written in memory 22 at a transfer rate of 75 sectors/second, and read out continuously from the memory 22 as playback data at the transfer rate of 18.75 sectors/second, so that the playback data may be continuously read out from the memory 22 while maintaining a data readout region in excess of the predetermined volume L within the memory 22. The playback data intermittently written in the memory 22 may be continuously reproduced from the recording track on the magneto-optical disk 2 by means of the system controller 7 controlling the reproducing position on the recording track of the magneto-optical disk 2. In addition, a data read-out region (in excess of the predetermined volume L) is maintained in the memory 22, as described above, so that, even if the system controller 7 detects the occurrence of a track jump etc due to, for example, disturbances, and the operation of reproducing the magneto-optical disk 2 is discontinued, playback data may be read out from the data readout region to continue the output of the analogue audio signals, and a resetting operation may be executed in the interim. The play time may also be displayed by reading the last cluster of a section of, for example, music and multiplying the cluster address by 32/75 and the reciprocal of the data compression ratio.

It is to be noted that the present invention is not limited to the above described embodiment, but may comprise various modifications. For example, although the above disk recording/reproducing apparatus has been explained in connection with recording and/or reproduction of B level stereo mode ADPCM audio data, recording and/or reproduction may be performed similarly of the ADPCM audio data of other modes of other CD-I systems. The method of data compression is also not limited to ADPCM. The number of sectors constituting a cluster is not limited to 32, but a cluster may be composed of any other number of sectors, such as 64 sectors.

In the disk recording apparatus described above, when recording data on a disk-shaped recording medium, on which the cluster addresses and the sector addresses are pre-recorded, the digital data to be recorded are momentarily stored in a memory, the digital data from the memory are arranged into clusters comprising a predetermined number of sectors, cluster-linking sectors having a length longer than the interleaving length are arrayed at linking portions between neighbouring clusters, and the data are interleaved and recorded at predetermined recording positions of the disk-shaped recording medium based on the cluster addresses and the sector addresses reproduced from the recording medium. In this manner, interleaving of data in a given cluster is confined within the ranges of the cluster-linking sectors, without affecting the neighbouring clusters, so that cluster by cluster recording may be made, while the recording starting sector position may be obtained easily from the cluster addresses and the sector addresses.

Also, in the disk reproducing apparatus described above, playback data are reproduced from a disk-shaped recording medium, in which cluster addresses and sector addresses are pre-recorded, digital data are arranged into clusters each comprising a predetermined number of clusters, cluster-linking sectors longer than the interleaving length are arrayed at linking portions between neighbouring clusters, and in which the data are interleaved before recording, on the basis of the cluster addresses and the sector addresses. The reproduced data are momentarily stored in the memory and are written when the data volume stored in the memory is less than a predetermined volume so that a readout space in excess of the predetermined data volume is maintained in the memory, in order that dropout of playback data due to the cluster-linking sectors may be buffered and hence continuous playback data may be obtained from the memory. Another feature is that the play time may be provided easily from the cluster addresses.

## Claims

1. A disk-shaped recording medium (2) in which data to be recorded thereon are divided into sectors (BO ... B31) of a predetermined length and are arrayed into clusters (C_{K}, C_{K+1}) each comprising a predetermined number of the sectors (B0 ... B31), and in which cluster-linking sectors (L1 ... L5) longer than the interleaving length for said data are added at connecting portions of neighbouring clusters, wherein
cluster addresses for specifying the clusters (C_{K}, C_{K+1}) and sector addresses for specifying the sectors (BO ... B31) in each cluster (C_{K}, C_{K+1}) are prerecorded on the recording medium (2).

2. A disk-shaped recording medium (2) according to claim 1, comprising at least one recording track, and in which said cluster addresses and said sector addresses are prerecorded by radially offsetting at least a portion of the or a recording track.

3. An optical disk recording apparatus in which data to be recorded on an optical disk (2) are divided into sectors (BO ... B31) of a predetermined length and are arrayed into clusters (C_{K}, C_{K+1}) each comprising a predetermined number of the sectors (BO ... B31), and in which cluster addresses for specifying the clusters (C_{K}, C_{K+1}) and sector addresses for specifying the sectors (BO ... B31) in each cluster (C_{K}, C_{K+1}) are prerecorded on said disk (2), the apparatus comprising:
memory means (14) for transiently storing input digital data representing a bit compressed continuous signal;
signal processing means (7, 15) for reading said input digital data from said memory means (14) as a plurality of said sectors (B0 ... B31), arraying said input digital data into said clusters (C_{K}, C_{K+1}) each comprising a predetermined number of said sectors, appending to connecting portions of said clusters (C_{K}, C_{K+1}) cluster-linking sectors (L1 ... L5) and interleaving said digital data in said clusters, wherein said cluster-linking sectors are longer than the interleaving length for said digital data;
address reproducing means (3, 5) for reproducing said pre-recorded cluster addresses and said pre-recorded sector addresses from said disk (2);
controlling means (7, 6) for controlling the position of recording on said disk (2) based on said cluster addresses and said sector addresses reproduced by said address reproducing means (3, 5); and
recording means (3, 16) for recording the digital data from said signal processing means (7, 15) on address positions on said disk specified by said controlling means (7, 6).

4. An optical disk recording apparatus according to claim 3, comprising:
abnormal condition detection means (5) for detecting detracking and/or defocusing during a recording operation, thereby detecting an abnormal condition in the recording operation;
resetting controlling means for inhibiting said recording operation when an abnormal condition is detected by said abnormal condition detection means, and for resetting said memory means from said abnormal condition to a normal condition; and
memory controlling means (7) for controlling data readout from said memory means (14) by reading a predetermined amount of said data on a cluster-by-cluster basis from said memory means (14) when the volume of said input digital data stored in said memory means (14) exceeds a first preset volume (K) thereby maintaining a writing space more than a second preset volume in said memory means (14); wherein
said controlling means (7, 6) controls the position of recording so that said data intermittently read out on a cluster-by-cluster basis from said memory means (14) under control of said memory controlling means (7) are recorded on a recording track of said disk (2) on the basis of said pre-recorded cluster addresses and said sector addresses.

5. An optical disk recording apparatus according to claim 4, wherein said second preset volume is sufficient to store that data entered into said memory means (14) during the time taken for restoration from an unrecordable state to a recordable state.

6. An optical disk recording apparatus according to claim 4 or claim 5, wherein said first preset volume (K) corresponds to the data volume of one of said clusters (C_{K}, C_{K+1}).

7. An optical disk recording apparatus according to any one of claims 3 to 6, wherein said cluster-linking sectors (L1 ... L5) comprise dummy data.

8. An optical disk recording apparatus according to any one of claims 3 to 7, wherein each of said sectors corresponds to a block of 98 eight-to-fourteen modulation (EFM) frames of a compact disk.

9. An optical disk recording apparatus according to any one of claims 3 to 8, further comprising processing means (7) for calculating the recording time available on a disk (2) in response to cluster addresses pre-recorded on said disk (2).

10. An optical disk reproducing apparatus for use with a disk (2) on which compressed digital data recorded on said disk (2) are divided into sectors (BO ... B31) of a predetermined length and are arrayed into clusters (C_{K}, C_{K+1}) each comprising a predetermined number of the sectors (BO ... B31), on which cluster-linking sectors (L1 ... L5) longer than the interleaving length of the data are added at connecting portions of neighbouring clusters (C_{K}, C_{K+1}), and on which cluster addresses for specifying said clusters (C_{K}, C_{K+1}) and sector addresses for specifying said sectors (BO ... B31) are prerecorded, said apparatus comprising
address reproducing means (3, 5) for reproducing said cluster addresses and said sector addresses from said disk;
memory means (22) for sequentially storing compressed digital data reproduced from said disk;
expanding means (23, 27) for expanding compressed digital data read from said memory means and outputting the expanded data;
memory controlling means (7) for monitoring the data volume stored in said memory means (22) for controlling writing to and readout from said memory means (22) so that data writing in said memory means is terminated before an overflow of said memory means occurs and data writing is re-started when the data volume stored in said memory means is less than a predetermined volume (L); and
controlling means (7, 6) for controlling the playback position on said disk (2) at the time of re-starting data writing in said memory means (22), on the basis of the cluster addresses and the sector addresses reproduced by said address reproducing means (3, 5), so that data contiguous to data stored in said memory means (22) are reproduced.

11. An optical disk recording apparatus according to claim 10, wherein each of said sectors (B0 ... B31) corresponds to a block (98 eight-to-fourteen modulation (EFM) frames) of a compact disk.

12. An optical disk recording apparatus according to claim 10 or claim 11, further comprising processing means for calculating the playback time available on a disk (2) in response to the cluster addresses recorded on said disk (2).

## Patentansprüche

1. Plattenförmiger Aufzeichnungsträger (2), auf dem aufzuzeichnende Daten in Sektoren (B0 ... B31) einer vorbestimmten Länge aufgeteilt sind und in Clustern (C_{K}, C_{K+1}) angeordnet sind, die jeweils eine vorbestimmte Anzahl an Sektoren (B0 ... B31) aufweisen, und bei dem clusterverbindende Sektoren (L1 ... L5), die länger sind als die Verschachtelungslänge der Daten, an Verbindungsabschnitten benachbarter Cluster hinzugefügt werden, wobei
Clusteradressen zur Spezifizierung der Cluster (C_{K}, C_{K+1}) und Sektoradressen zur Spezifizierung der Sektoren (B₀ ...B₃₁) in jedem Cluster (C_{K}, C_{K+1}) auf dem Aufzeichnungsträger (2) voraufgezeichnet sind.

2. Plattenförmiger Aufzeichnungsträger (2) nach Anspruch 1,
mit wenigstens einer Aufzeichnungsspur, und bei dem die Clusteradressen und die Sektoradressen durch radiales Versetzen wenigstens eines Abschnittes der oder einer Aufzeichnungsspur voraufgezeichnet sind.

3. Aufzeichnungvorrichtung für optische Platten, bei der auf einer optischen Platte (2) aufzuzeichnende Daten in Sektoren (B0 ... B31) einer vorbestimmten Länge aufgeteilt und in Clustern (C_{K}, C_{K+1}) angeordnet sind, die jeweils eine vorbestimmte Anzahl der Sektoren (B0 ... B31) aufweisen und bei der Clusteradressen zur Spezifizierung der Cluster (C_{K}, C_{K+1}) und Sektoradressen zur Spezifizierung der Sektoren (B0 ... B31) in jedem Cluster (C_{K}, C_{K+1}) auf der Platte (2) voraufgezeichnet sind, wobei die Vorrichtung aufweist:
eine Speichereinrichtung (14) zur vorübergehenden Speicherung eingegebener digitaler Daten, die ein kontinuierliches bitkomprimiertes Signal wiedergeben;
eine Signalverarbeitungseinrichtung (7, 15) zum Lesen der eingegebenen digitalen Daten aus der Speichereinrichtung (14) als mehrere der Sektoren (B0 ... B31), Anordnen der eingegebenen Digitaldaten in die Cluster (C_{K}, C_{K+1}), die jeweils eine vorbestimmte Anzahl der Sektoren aufweisen, Hinzufügen von clusterverbindenden Sektoren (L1 ... L5) an Verbindungsabschnitten der Cluster (C_{K}, C_{K+1}) und Verschachtelung der digitalen Daten in den Clustern, wobei die clusterverbindenden Sektoren länger sind als die Verschachtelungslänge für die digitalen Daten;
eine Adressen-Wiedergabeeinrichtung (3, 5) zur Wiedergabe der voraufgezeichneten Clusteradressen und der voraufgezeichneten Sektoradressen von der Platte (2);
eine Steuereinrichtung (7, 6) zur Steuerung der Position der Aufzeichnung auf der Platte (2) auf Grundlage der Clusteradressen und Sektoradressen, die durch die Adressen-Wiedergabeeinrichtung (3, 5) wiedergegeben werden; und
eine Aufzeichnungseinrichtung (3, 16) zur Aufzeichnung der digitalen Daten von der Signalverarbeitungseinrichtung (7, 15) an Adreßpositionen auf der Platte, die durch die Steuereinrichtung (7, 6) spezifiziert sind.

4. Aufzeichnungsvorrichtung für eine optische Platte nach Anspruch 3, aufweisend:
eine Anormalzustands-Erfassungseinrichtung (5) zur Erfassung eines Aus-der-Spurlaufens und/oder Defokussierung während eines Aufzeichnungsvorganges, wodurch ein anormaler Zustand bei dem Aufzeichnungsvorgang erfaßt wird;
eine Rückstell-Steuereinrichtung zur Verhinderung des Aufzeichnungsvorganges, wenn ein Anormal-Zustand durch die Anormalzustands-Erfassungseinrichtung erfaßt wird, und zum Zurücksetzen der Speichereinrichtung von dem Anormal-Zustand zu einem Normal-Zustand; und
eine Speichersteuereinrichtung (7) zur Steuerung des Datenauslesens von der Speichereinrichtung (14) durch clusterweise Lesen einer vorbestimmten Datenmenge aus der Speichereinrichtung (14), wenn das Volumen der eingegebenen Digitaldaten, die in der Speichereinrichtung (14) gespeichert sind, einen ersten voreingestellten Wert (K) überschreitet, wodurch ein Schreibraum über das zweite voreingestellte Volumen hinaus in der Speichereinrichtung (14) freigehalten wird, wobei
die Speichereinrichtung (7, 6) die Position der Aufzeichnung so steuert, daß die Daten, die abschnittsweise clusterweise von der Speichereinrichtung (14) unter Steuerung der Speichersteuerschaltung (7) ausgelesen werden, auf einer Aufzeichnungsspur der Platte (2) auf Grundlage der voraufgezeichneten Clusteradressen und der Sektoradressen aufgezeichnet werden.

5. Aufzeichnungsvorrichtung für eine optische Platte nach Anspruch 4,
bei der das zweite voreingestellte Volumen ausreicht, um die Daten zu speichern, die durch die Speichereinrichtung (14) während der Zeit der Wiederherstellung von einem nicht aufzeichenbaren Zustand zu einem aufzeichenbaren Zustand eingegeben werden.

6. Aufzeichnungsvorrichtung für eine optische Platte nach Anspruch 4 oder 5,
bei der das erste voreingestellte Volumen (K) dem Datenvolumen von einem der Cluster (C_{K}, C_{K+1}) entspricht.

7. Aufzeichnungsvorrichtung für optische Platten nach einem der Ansprüche 3 bis 6,
wobei die clusterverbindenden Sektoren (L1 ... L5) Leerdaten aufweisen.

8. Aufzeichnungsvorrichtung für optische Platten nach einem der Ansprüche 3 bis 7,
bei der jeder der Sektoren einen Block von 98 acht-zu-vierzehn modulierten Rahmen einer Compact Disc entspricht.

9. Aufzeichnungsvorrichtung für optische Platten nach einem der Ansprüche 3 bis 8,
weiterhin aufweisend eine Verarbeitungseinrichtung (7) zur Berechnung der auf einer Platten (2) verfügbaren Aufzeichnungszeit als Antwort auf Clusteradressen, die auf der Platte (2) voraufgezeichnet sind.

10. Wiedergabevorrichtung für eine optische Platte zur Verwendung mit einer Platte (2), auf der komprimierte digitale Daten, die auf der Platte (2) aufgezeichnet sind, in Sektoren (B0 ... B31) einer vorbestimmten Länge aufgeteilt und in Cluster (C_{K}, C_{K+1}) angeordnet sind, von denen jeder eine vorbestimmte Anzahl der Sektoren (B0 ... B31) aufweist, auf der clusterverbindende Sektoren (L1 ... L5), die nicht länger als die Verschachtelungslänge der Daten sind, an Verbindungsabschnitten benachbarter Cluster (C_{K}, C_{K+1}) hinzugefügt werden, und auf der Clusteradressen zur Spezifizierung der Cluster (C_{K}, C_{K+1}) und Sektoradressen zur Spezifizierung der Sektoren (B0 ... B31) voraufgezeichnet sind, wobei die Vorrichtung aufweist:
eine Adressen-Wiedergabeeinrichtung (3, 5) zur Wiedergabe der Clusteradressen und der Sektoradressen von der Platte;
eine Speichereinrichtung (22) zur sequentiellen Speicherung komprimierter digitaler Daten, die von der Platte wiedergegeben werden;
eine Expandereinrichtung (23, 27) zur Expandierung komprimierter digitaler Daten, die von der Speichereinrichtung ausgelesen werden, und zur Ausgabe der expandierten Daten; eine Speichersteuereinrichtung (7) zur Überwachung des in der Speichereinrichtung (22) gespeicherten Datenvolumens, um das Schreiben und das Auslesen von der Speichereinrichtung (22) zu steuern, so daß das Datenschreiben in der Speichereinrichtung beendet wird, bevor ein Überfluß der Speichereinrichtung auftritt, und das Datenschreiben neugestaltet wird, wenn das in der Speichereinrichtung gespeicherte Datenvolumen weniger als ein vorbestimmter Wert (L) ist; und
eine Steuereinrichtung (7, 6) zur Steuerung der Wiedergabeposition auf der Platte (2) zum Zeitpunkt des Neustarts des Datenschreibens in der Speichereinrichtung (22) auf Grundlage der Clusteradressen und der Sektoradressen, die durch die Adreß-Wiedergabeeinrichtung (3, 5) wiedergegeben werden, so daß Daten wiedergegeben werden, die aneinandergrenzend in der Speichereinrichtung (22) gespeichert sind.

11. Aufzeichnungsvorrichtung für eine optische Platte nach Anspruch 10,
bei der jeder der Sektoren (B0 ... B31) einen Block von 98 acht-zu-vierzehn modulierten (EFM) Rahmen einer Compact Disc entspricht.

12. Aufzeichnungsvorrichtung für optische Platten nach Anspruch 10 oder 11, weiterhin aufweisend eine Verarbeitungseinrichtung zur Berechnung der Wiedergabezeit, die auf der Platte (2) verfügbar ist, als Antwort auf die Clusteradressen, die auf der Platte (2) aufgezeichnet sind.

## Revendications

1. Support d'enregistrement sous forme de disque (2) dans lequel des données à enregistrer sont divisées en secteurs (B0...B31) ) d'une longueur prédéterminée et sont disposées en groupes (Cₖ, Cₖ₊₁) comportant chacun un nombre prédéterminé des secteurs (B0...B31), et dans lequel des secteurs de liaison de groupes (L1...L5) plus longs que la longueur d'entrelacement pour lesdites données sont ajoutés en des parties de liaison de groupes adjacents, dans lequel
des adresses de groupe pour spécifier les groupes (Cₖ, Cₖ₊₁) et des adresses de secteur pour spécifier les secteurs (B0...B31 ) dans chaque groupe (Cₖ, Cₖ₊₁) sont préenregistrées sur le support d'enregistrement (2).

2. Support d'enregistrement sous forme de disque (2) selon la revendication 1, comportant au moins une piste d'enregistrement, et dans lequel lesdites adresses de groupe et lesdites adresses de secteur sont préenregistrées en déportant radialement au moins une partie de la ou d'une piste d'enregistrement.

3. Dispositif d'enregistrement à disque optique dans lequel des données à enregistrer sur un disque optique (2) sont divisées en secteurs (B0...B31) d'une longueur prédéterminée et sont disposées en groupes (Cₖ, Cₖ₊₁) comportant chacun un nombre prédéterminé des secteurs (B0...B31), et dans lequel des adresses de groupe pour spécifier les groupes (Cₖ, Cₖ₊₁) et des adresses de secteur pour spécifier les secteurs (B0...B31) dans chaque groupe (Cₖ, Cₖ₊₁) sont préenregistrées sur ledit disque (2), le dispositif comportant :
des moyens de mémoire (14) pour mémoriser temporairement des données numériques d'entrée représentant un signal continu à compression de bit,
des moyens de traitement de signaux (7, 15) pour lire lesdites données numériques d'entrée à partir desdits moyens de mémoire (14) sous la forme d'une pluralité desdits secteurs (B0...B31), disposer lesdites données numériques d'entrée dans lesdits groupes (Cₖ, Cₖ₊₁) comportant chacun un nombre prédéterminé desdits secteurs, ajouter à des parties de liaison desdits groupes (Cₖ, Cₖ₊₁) des secteurs de liaison de groupe (L1...L5) et entrelacer lesdites données numériques dans lesdits groupes, dans lequel lesdits secteurs de liaison de groupes sont plus longs que la longueur d'entrelacement pour lesdites données numériques;
des moyens de reproduction d'adresse (3, 5) pour reproduire lesdites adresses de groupe préenregistrées et lesdites adresses de secteur préenregistrées à partir dudit disque (2);
des moyens de contrôle (7, 6) pour contrôler la position d'enregistrement sur ledit disque (2) en fonction desdites adresses de groupe et desdites adresses de secteur reproduites par lesdits moyens de reproduction d'adresse (3, 5); et
des moyens d'enregistrement (3, 16) pour enregistrer les données numériques provenant desdits moyens de traitement de signaux (7, 15) en des positions d'adresse sur ledit disque spécifiées par lesdits moyens de contrôle (7, 6).

4. Dispositif d'enregistrement à disque optique selon la revendication 3, comportant :
des moyens de détection de condition anormale (5) pour détecter une erreur de suivi de piste et/ou une déconcentration durant une opération d'enregistrement, en détectant ainsi une condition anormale d'une opération d'enregistrement;
des moyens de contrôle de remise à zéro pour bloquer ladite opération d'enregistrement lorsqu'une condition anormale est détectée par lesdits moyens de détection de condition anormale, et pour restaurer lesdits moyens de mémoire de ladite condition anormale dans une condition normale; et
des moyens de contrôle de mémoire (7) pour contrôler les données lues desdits moyens de mémoire (14) en lisant une quantité prédéterminée desdites données groupe par groupe à partir desdits moyens de mémoire (14) lorsque le volume desdites données numériques d'entrée mémorisées dans lesdits moyens de mémoire (14) dépasse un premier volume prédéterminé (K) en maintenant ainsi un espace d'écriture supérieur à un second volume prédéterminé dans lesdits moyens de mémoire (14); dans lequel
lesdits moyens de contrôle (7, 6) contrôlent la position d'enregistrement de sorte que lesdites données lues de façon intermittente groupe par groupe desdits moyens de mémoire (14) sous le contrôle desdits moyens de contrôle de mémoire (7) sont enregistrées sur une piste d'enregistrement dudit disque (2) en fonction desdites adresses de groupe et desdites adresses de secteur préenregistrées.

5. Dispositif d'enregistrement à disque optique selon la revendication 4, dans lequel ledit second volume prédéterminé est suffisant pour mémoriser les données introduites dans lesdits moyens de mémoire (14) durant le temps nécessaire pour une restauration d'un état de non enregistrement dans un état d'enregistrement.

6. Dispositif d'enregistrement à disque optique selon la revendication 4 ou la revendication 5, dans lequel ledit premier volume prédéterminé (K) correspondant au volume de données d'un desdits groupes (Cₖ, Cₖ₊₁).

7. Dispositif d'enregistrement à disque optique selon l'une quelconque des revendications 3 à 6, dans lequel lesdits secteurs de liaison de groupes (L1...L5) comportent des données fictives.

8. Dispositif d'enregistrement à disque optique selon l'une quelconque des revendications 3 à 7, dans lequel chacun desdits secteurs correspond à un bloc de 98 trames de modulation huit à quatorze (EFM) d'un disque compact.

9. Dispositif d'enregistrement à disque optique selon l'une quelconque des revendications 3 à 8, comportant en outre des moyens de traitement (7) pour calculer le temps d'enregistrement disponible sur un disque (2) en réponse à des adresses de groupe préenregistrées sur ledit disque (2).

10. Dispositif de reproduction à disque optique pour une utilisation avec un disque (2) sur lequel des données numériques comprimées enregistrées sur ledit disque (2) sont divisées en secteurs (B0...B31) d'une longueur prédéterminée et sont disposées en groupes (Cₖ, Cₖ₊₁) comportant chacun un nombre prédéterminé de secteurs (B0...B31), sur lequel des secteurs de liaison de groupes (L1...L5) plus longs que la longueur d'entrelacement des données sont ajoutés en des parties de liaison de groupes adjacents (Cₖ, Cₖ₊₁), et sur lequel des adresses de groupe pour spécifier lesdits groupes (Cₖ, Cₖ₊₁) et des adresses de secteur pour spécifier lesdits secteurs (B0...B31) sont préenregistrées, ledit dispositif comportant :
des moyens de reproduction d'adresse (3, 5) pour reproduire lesdites adresses de groupe et lesdites adresses de secteur depuis ledit disque;
des moyens de mémoire (22) pour mémoriser séquentiellement des données numériques comprimées reproduites depuis ledit disque;
des moyens de dilatation (23, 27) pour dilater les données numériques comprimées lues desdits moyens de mémoire et délivrer les données dilatées;
des moyens de contrôle de mémoire (7) pour contrôler le volume de données mémorisé dans lesdits moyens de mémoire (22) pour contrôler une écriture dans et une lecture desdits moyens de mémoire (22) de sorte qu'une écriture de données dans lesdits moyens de mémoire est achevée avant une apparition d'un dépassement desdits moyens de mémoire et une écriture de données est recommencée lorsque le volume de données mémorisé dans lesdits moyens de mémoire est inférieur à un volume prédéterminé (L); et
des moyens de contrôle (7, 6) pour contrôler la position de reproduction sur ledit disque (2) à l'instant du redéclenchement de l'écriture de données dans lesdits moyens de mémoire (22), en fonction des adresses de groupe et des adresses de secteur reproduites par lesdits moyens de reproduction d'adresse (3, 5), de sorte que des données adjacentes à des données mémorisées dans lesdits moyens de mémoire (22) soient reproduites.

11. Dispositif d'enregistrement à disque optique selon la revendication 10, dans lequel chacun desdits secteurs (B0...B31) correspond à un bloc de 98 trames à modulation huit à quatorze (EFM) d'un disque compact.

12. Dispositif d'enregistrement à disque optique selon la revendication 10 ou la revendication 11, comportant en outre des moyens de traitement pour calculer le temps de reproduction disponible sur un disque (2) en réponse aux adresses de groupe enregistrées sur ledit disque (2).
